# EUROPÄISCHE PATENTANMELDUNG

(11) **EP 0 750 930 A1**
(43) Veröffentlichungstag der Anmeldung: **02.01.1997**
(21) Anmeldenummer: 96109359.8
(22) Anmeldetag: 12.06.1996
(51) Int. Cl.: B01D 46/02, B01D 53/10, B01D 53/83

(54) **Verfahren zur Entstaubung eines Rohgasstromes und/oder Sorption von gasförmigen Stoffen aus dem Rohgasstrom und Vorrichtung zur Durchführung des Verfahrens**

(30) Priorität: 28.06.1995 DE 19523417
(71) Anmelder: METALLGESELLSCHAFT AKTIENGESELLSCHAFT, 60323 Frankfurt am Main (DE)
(72) Erfinder: Hartmann, Horst, Dr., 61348 Bad Homburg (DE); Maus, Werner, 63073 Offenbach (DE)

(57) **Zusammenfassung**

Bei dem Verfahren erfolgt die Sorption durch Zugabe von trockenen Adsorbentien und/oder durch Zugabe von trockenem Absorptionsmittel in einem senkrecht angeordneten und kreisförmig begrenzten Reaktor (1), bei dem der Rohgasstrom den Reaktor (1) von unten nach oben durchströmt, wobei der Rohgasstrom mit den trockenen Adsorbentien und/oder mit dem trockenen Absorptionsmittel in Kontakt gebracht wird und der Rohgasstrom anschließend durch ein den Reaktor (1) kreisförmig umgebendes Schlauchfilter geleitet wird. Das Verfahren ist dadurch gekennzeichnet, daß der Rohgasstrom nach dem Austritt aus dem Reaktor (1) zuerst durch eine perforierte Zylinderwand (4) und anschließend zu den Filterschläuchen (20) des Schlauchfilters geleitet wird.

## Beschreibung

Die Erfindung bezieht sich auf ein Verfahren zur Entstaubung eines Rohgasstromes und/oder Sorption von gasförmigen Stoffen aus dem Rohgasstrom durch Zugabe von trockenen Adsorbentien und/oder durch Zugabe von trockenem Absorptionsmittel in einem senkrecht angeordneten und kreisförmig begrenzten Reaktor, bei dem der Rohgasstrom den Reaktor von unten nach oben durchströmt, wobei der Rohgasstrom mit den trockenen Adsorbentien und/oder mit dem trockenen Absorptionsmittel in Kontakt gebracht wird und der Rohgasstrom anschließend durch ein den Reaktor kreisförmig umgebendes Schlauchfilter geleitet wird, und auf eine Vorrichtung zur Durchführung des Verfahrens, bestehend aus einem mittig senkrecht angeordneten, kreisförmig begrenzten Reaktor, einem um den Reaktor kreisförmig angeordneten Schlauchfilter mit achsparallel zum Reaktor senkrecht angeordneten Filterschläuchen, wobei das obere Ende des Reaktors tiefer angeordnet ist als der Gasaustritt des Schlauchfilters.

Verfahren zur Entstaubung eines Rohgasstromes und/oder Sorption von gasförmigen Stoffen aus dem Rohgasstrom sind bekannt. Ferner sind Verfahren bekannt, bei denen die Entstaubung des Rohgasstromes mit Hilfe eines Schlauchfilters erfolgt. In der DE-PS 40 29 395 werden ein Verfahren und eine Vorrichtung zur Adsorption oder Chemisorption von gasförmigen Stoffen aus einem Rohgasstrom durch Zugabe von trockenen Adsorbentien oder von Adsorbentien ggf. mit Eigenschaften, die eine chemische Reaktion mit den adsorbierenden Gaskomponenten bewirken, beschrieben, wobei das Rohgas und das frische Adsorbens einer Abscheideranlage mit mehreren als Schlauchfiltern ausgebildeten Gewebefilterkammern zugeführt wird. Die Vorrichtung zur Durchführung des Verfahrens besteht aus mehreren Gewebefilterkammern, die jeweils für sich gesehen ein separates Schlauchfilter darstellen. In jeder Gewebefilterkammer sind die einzelnen Filterschläuche um einen zentralen Freiraum angeordnet. Der in einem Bunker gesammelte Staub wird im unteren Teil des Rohgaskanals über eine Austrittsschleuse aus der Vorrichtung abgeführt. Dabei ist nachteilig, daß mehrere Gewebefilterkammern konstruktiv relativ aufwendig nebeneinander angeordnet werden müssen und eine gleichmäßige Beaufschlagung der einzelnen Filterschläuche in den jeweiligen Gewebefilterkammern nicht gewährleistet ist. Darüber hinaus ist nachteilig, daß für die beschriebene Vorrichtung relativ viel Platz vorhanden sein muß, der nur in den seltensten Fällen vorhanden ist.

In der US-PS 4,465,498 wird ein Schlauchfilter in Rundbauweise beschrieben, das zur Entstaubung des Rohgasstromes dient. Die einzelnen Filterschläuche sind dabei nebeneinander auf Kreisbahnen angeordnet. Das Gehäuse des Schlauchfilters besteht aus einem zylindrischen Mantel. In der Mitte des Schlauchfilters ist ein Hohlraum angeordnet, in welchen eine senkrecht angeordnete Führungswelle hinreinragt, auf welcher ein unmittelbar über den Filterschläuchen horizontal drehbar gelagerter Arm mit Düsen angeordnet ist, durch welchen Spülluft zur Abreinigung mehrerer Filterschläuche geleitet werden kann. Die Sorption von gasförmigen Stoffen aus einem Rohgasstrom ist in diesem Schlauchfilter jedoch nicht möglich.

Der Erfindung liegt die Aufgabe zugrunde, ein Verfahren zur Entstaubung des Rohgasstromes und/oder Sorption von gasförmigen Stoffen aus dem Rohgasstrom zu schaffen, bei dem die Entstaubung mit Hilfe eines Schlauchfilters erfolgt, wobei die einzelnen Filterschläuche über ihre Länge relativ gleichmäßig mit dem zumindest teilweise im Reaktor bereits vorbehandelten Rohgasstrom beaufschlagt werden. Der Erfindung liegt ferner die Aufgabe zugrunde, eine Vorrichtung zur Durchführung des Verfahrens zu schaffen.

Die der Erfindung zugrundeliegende Aufgabe wird dadurch gelöst, daß der Rohgasstrom nach dem Austritt aus dem Reaktor zuerst durch eine perforierte Zylinderwand und anschließend zu den Filterschläuchen des Schlauchfilters geleitet wird. Die perforierte Zylinderwand kann vielseitig ausgestaltet sein. Sie kann beispielsweise aus einem Blech bestehen, das kreisförmige oder eckige Durchtrittsöffnungen aufweist. Sie kann als mehrschichtiges Drahtgewebe gestaltet sein oder aus einzelnen Winkelprofilen bestehen, die nicht miteinander verbunden sind, wobei der im Reaktor bereits vorbehandelte Rohgasstrom zwischen den einzelnen Winkelprofilen hindurchströmt und anschließend zu den Filterschläuchen gelangt. Als trockene Adsorbentien werden beispielsweise Aktivkohle oder Herdofenkoks eingesetzt.
Als Absorptionsmittel werden beispielsweise Ca(OH)₂ oder Na₂CO₃ eingesetzt. Die Wahl der Adsorbentien und/oder Absorptionsmittel richtet sich nach den jeweiligen Schadstoffen im Rohgasstrom. Es hat sich in überraschender Weise gezeigt, daß der aus dem Reaktor oben austretende bereits vorbehandelte Rohgasstrom beim Auftreffen auf die perforierte Zylinderwand in vorteilhafter Weise nach unten umgelenkt wird und zunächst an der perforierten Zylinderwand nach unten strömt, wobei gleichzeitig ein kontinuierlicher Durchtritt einer Teilmenge des vorbehandelten Rohgasstroms durch die perforierte Zylinderwand erfolgt. Auf diese Weise ist es möglich, die einzelnen Filterschläuche über ihre gesamte Länge relativ gleichmäßig mit dem vorbehandelten Rohgasstrom zu beaufschlagen.

Eine bevorzugte Ausgestaltung der Erfindung besteht darin, daß der Rohgasstrom beim Durchströmen der perforierten Zylinderwand nach oben oder nach unten umgelenkt wird. Wird der Rohgasstrom nach oben umgelenkt, so wirkt die perforierte Zylinderwand im verstärkten Maße als Prallabscheider, was besonders dann vorteilhaft ist, wenn die Staubpartikeln relativ groß sind, was eine Beschädigung der Filterschläuche durch Abrasion zur Folge haben kann. Sind die Staubpartikeln jedoch relativ klein, so ist es vorteilhaft, die weitaus größere Menge an Staub im Schlauchfilter abzuscheiden. Dazu wird der Rohgasstrom nach unten umgelenkt, so daß gewährleistet ist, daß die Staubpartikeln fast vollständig mitgerissen und zu den Filterschläuchen geleitet werden, wobei gleichzeitig eine bessere Ausnutzung der Absorbentien möglich ist.

Nach einer weiteren Ausgestaltung der Erfindung wird die gesamte an der perforierten Zylinderwand und im Schlauchfilter abgeschiedene Menge an Staub und/oder trockenen Adsorbentien und/oder trockenem Absorptionsmittel ggf. nach Abreinigung der perforierten Zylinderwand und/oder nach Abreinigung der einzelnen Filterschläuche in einen unterhalb der perforierten Zylinderwand und unterhalb der Filterschläuche angeordneten Sammelbunker eingetragen. Unter den trockenen Adsorbentien ist neben dem eigentlichen Adsorbens auch das zumindest teilweise bereits beaufschlagte Adsorbat zu verstehen. In vorteilhafter Weise gelangt somit der an der perforierten Zylinderwand anhaftende und an den einzelnen Filterschläuchen abgeschiedene Staub in einen gemeinsamen Sammelbunker, der in der Regel eine konische Begrenzung aufweist.

Gemäß einer weiteren bevorzugten Ausgestaltung der Erfindung wird die in den Sammelbunker eingetragene abgeschiedene Menge an Staub und/oder trockenen Adsorbentien und/oder trockenem Absorptionsmittel über eine Förderrinne in einen außerhalb des Reaktors und außerhalb des Schlauchfilters seitlich neben dem Reaktor angeordneten Zwischenbunker geleitet und mindestens teilweise über eine unter dem Zwischenbunker angeordnete Dosiervorrichtung in den Einlaßstutzen des Reaktors für den Rohgasstrom geleitet und mit dem Rohgasstrom erneut in Kontakt gebracht, wobei die dem Rohgasstrom nicht erneut zugeführte Menge an Staub und/oder trockenen Adsorbentien und/oder trockenem Absorptionsmittel aus dem Zwischenbunker über eine Schleuse abgeführt wird. Diese Maßnahme hat den Vorteil, daß die nicht mit Schadstoffen vollständig beaufschlagten Adsorbentien erneut mit dem Rohgasstrom in Kontakt gebracht werden und dabei vollständig in Adsorbat überführt werden können. Auf diese Weise läßt sich die Menge an einzusetzenden Adsorbentien minimieren.

Die der Erfindung zugrundeliegende Aufgabe wird ferner durch eine Vorrichtung zur Durchführung des Verfahrens gelöst, bei der senkrecht um den Reaktor zwischen Reaktor und denjenigen Filterschläuchen, die dem Reaktor am nächsten angeordnet sind, eine perforierte Zylinderwand angeordnet ist. Die perforierte Zylinderwand wird dabei in vorteilhafter Weise an der Decke des Schlauchfilters fixiert. Die perforierte Zylinderwand weist Durchtrittsöffnungen für den vorbehandelten Rohgasstrom auf, der hinter der perforierten Zylinderwand zu den einzelnen Filterschläuchen gelangt.

Nach einer weiteren Ausgestaltung der Erfindung entspricht die Länge der perforierten Zylinderwand der Länge der Filterschläuche. Dies hat den Vorteil, daß die einzelnen Filterschläuche auf relativ einfache Weise fast vollständig über ihre gesamte Länge seitlich mit Rohgas beaufschlagt werden, was zur Folge hat, daß die Dicke des abgeschiedenen Staubs auf den einzelnen Filterschläuchen über die Länge der Filterschläuche nahezu konstant ist, so daß eine ungleichmäßige Beaufschlagung der Filterschläuche, die eine Zerstörung der Filterschläuche nach relativ kurzer Betriebszeit zur Folge haben kann, auf relativ einfache Weise vermieden wird.

Eine weitere Ausgestaltung der Erfindung besteht darin, daß die perforierte Zylinderwand aus mehreren, nicht miteinander verbundenen gleichschenkligen Winkelprofilen besteht, die kreisförmig um den Reaktor senkrecht angeordnet und jeweils mit der Decke des Schlauchfilters verbunden sind, wobei die Enden der Schenkel eines jeden Winkelprofils dem Reaktor zugewandt sind und zum Reaktor den gleichen Abstand x aufweisen und der freie Abstand a zwischen jeweils zwei unmittelbar benachbarten Winkelprofilen 20 bis 200 mm beträgt. Die Anordnung der perforierten Zylinderwand aus handelsüblichen Winkelprofilen ermöglicht eine Anordnung auf relativ einfache Weise. Die Abreinigung der einzelnen Winkelprofile der perforierten Zylinderwand erfolgt in vorteilhafter Weise durch Klopfung. Die Enden der Schenkel eines jeden Winkelprofils sind dem Reaktor zugewandt und weisen zum Reaktor den gleichen Abstand x auf. Durch diese Maßnahme wirkt jedes einzelne Winkelprofil als Prallabscheider, was vorteilhaft ist, wenn eine Schädigung der Filterschläuche durch Abrasion infolge einer großen Partikelgröße der einzelnen Staubpartikeln zu befürchten ist. Beträgt der freie Abstand a zwischen jeweils zwei unmittelbar benachbarten Winkelprofilen 20 bis 200 mm, so ist gewährleistet, daß die Filterschläuche gleichmäßig mit vorbehandeltem Rohgas beaufschlagt werden.

Nach einer weiteren Ausgestaltung der Erfindung besteht die perforierte Zylinderwand aus miteinander an den Längskanten verbundenen plattenförmigen Elementen, die zusammen in Form eines regelmäßigen n-Ecks um den Reaktor angeordnet sind und die Durchtrittsöffnungen aufweisen, deren Höhe oder Durchmesser b 20 bis 220 mm beträgt. In der Regel bilden 8 bis 12 plattenförmige Elemente die in Form eines 8- bzw. 12-Ecks angeordnete kreisförmige perforierte Zylinderwand. Auf diese Weise läßt sich die perforierte Zylinderwand konstruktiv einfach und schnell herstellen, da vorab jedes einzelne plattenförmige Element auf einfache Weise mit Durchtrittsöffnungen versehen werden kann und die plattenförmigen Elemente anschließend lediglich in Form eines n-Ecks angeordnet werden müssen. Als plattenförmige Elemente werden dabei in der Regel Bleche eingesetzt, die jeweils an ihren Längskanten miteinander verschweißt werden.

Eine weitere Ausgestaltung der Erfindung besteht darin, daß die Durchtrittsöffnungen an ihren oberen und/oder unteren Begrenzungen Laschen aufweisen, die zu den Filterschläuchen abgebogen sind, wobei der stumpfe Biegewinkel β im Bereich von 105 bis 165° liegt und die Breite c einer jeden Lasche 20 bis 200 mm und die Länge d einer jeden Lasche mindestens 50 mm betragen. Liegt der Biegewinkel β im Bereich von 105 bis 165°, so ist gewährleistet, daß der Rohgasstrom beim Durchströmen der perforierten Zylinderwand nach oben oder nach unten umgelenkt wird.

Gemäß einer weiteren Ausgestaltung der Erfindung ist die perforierte Zylinderwand von oben ausgehend zu den Filterschläuchen geneigt angeordnet, wobei der spitze Neigungswinkel α im Bereich von 3 bis 30° liegt. Dies hat den Vorteil, daß auch besonders feine Staubpartikeln mitgerissen werden und fast vollständig zu den einzelnen Filterschläuchen gelangen, was besonders dann wünschenswert ist, wenn eine Schädigung der Filterschläuche durch Abrasion auszuschließen ist.

Gemäß einer weiteren Ausgestaltung der Erfindung ist unterhalb der perforierten Zylinderwand und unterhalb der Filterschläuche um den Reaktor kreisförmig ein Sammelbunker mit Staubaustrag angeordnet. Dies hat den Vorteil, daß sowohl der an der perforierten Zylinderwand anhaftende Staub als auch der an den Filterschläuchen abgeschiedene Staub zusammen mit ggf. noch vorhandenem Adsorbens und dem Adsorbat in einem einzigen Sammelbunker abgeschieden werden können.

Nach einer weiteren Ausgestaltung der Erfindung weist der Sammelbunker als Staubaustrag im unteren Teil eine Förderrinne auf, die mit einem seitlich neben dem Reaktor angeordneten Zwischenbunker verbunden ist, der eine Schleuse aufweist. Dadurch wird das Austragen von Staub, Adsorbens und Adsorbat, das über die Schleuse erfolgt, in vorteilhafter Weise erleichtert.

Gemäß einer weiteren Ausgestaltung der Erfindung ist zwischen dem Zwischenbunker und dem Einlaßstutzen des Reaktors eine Dosiervorrichtung angeordnet. Dies ermöglicht die Rückführung des im Zwischenbunker noch vorhandenen Adsorbens bzw. die Rückführung des noch nicht beladenen Absorptionsmittels in den Rohgasstrom, so daß die Menge des einzusetzenden Adsorbens bzw. Absorptionsmittels minimiert werden kann.

Nach einer weiteren Ausgestaltung der Erfindung weist die Dosiervorrichtung eine Aufgabestelle für trockene Adsorbentien und/oder trockene Absorptionsmittel auf. Auf diese Weise können trockene Adsorbentien und/oder trockene Absorptionsmittel relativ einfach und schnell dem Rohgasstrom zugeführt werden. Darüber hinaus kann die Menge der einzusetzenden trockenen Adsorbentien und/oder trockenen Absorptionsmittel an der Aufgabestelle variiert und somit schwankenden Bedingungen im Rohgasstrom angepaßt werden.

Die Erfindung wird nachfolgend anhand der Zeichnung (Fig. 1 bis 9) näher erläutert.
- Fig. 1: zeigt einen mittig senkrecht angeordneten, kreisförmig begrenzten Reaktor und ein um den Reaktor kreisförmig angeordnetes Schlauchfilter im Längsschnitt.
- Fig. 2a, 2b: zeigen das Detail "Y" gemäß Fig. 1 und die zugehörige Draufsicht.
- Fig. 3: zeigt das Detail "Z" gemäß Fig. 1.
- Fig. 4: zeigt eine weitere Ausführungsform des Details "Z" gemäß Fig. 1.
- Fig. 5: zeigt die Draufsicht auf die perforierte Zylinderwand gemäß Schnitt C-C aus Fig. 3.
- Fig. 6: zeigt die Draufsicht auf die perforierte Zylinderwand gemäß Schnitt D-D aus Fig. 4.
- Fig. 7: zeigt einen Teil der perforierten Zylinderwand in Blickrichtung des Pfeils in Fig. 5.
- Fig. 8: zeigt einen Teil der perforierten Zylinderwand in Blickrichtung des Pfeils in Fig. 6.
- Fig. 9: zeigt einen Querschnitt durch den Reaktor und den um den Reaktor kreisförmig angeordneten Sammelbunker gemäß Schnitt A-A aus Fig. 1.

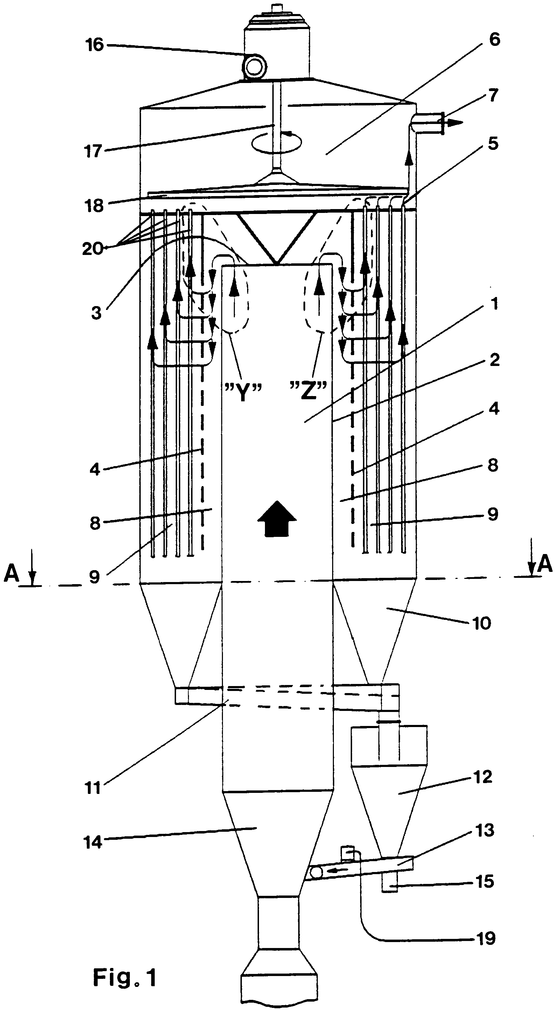

In Fig. 1 ist ein mittig senkrecht angeordneter, kreisförmig begrenzter Reaktor (1) und ein um den Reaktor (1) kreisförmig angeordnetes Schlauchfilter im Längsschnitt dargestellt. Der Rohgasstrom gelangt über den Einlaßstutzen (14) in den Reaktor (1) und durchströmt den Reaktor (1) in Pfeilrichtung von unten nach oben. Das obere Ende (3) des Reaktors (1) ist tiefer angeordnet als der Gasaustritt (5) des Schlauchfilters, so daß der vorbehandelte Rohgasstrom am oberen Ende (3) des Reaktors (1) austreten kann. Nach dem Austritt aus dem Reaktor (1) gelangt der vorbehandelte Rohgasstrom zur perforierten Zylinderwand (4) und wird nach unten in Pfeilrichtung umgelenkt. Der vorbehandelte Rohgasstrom strömt nun an der perforierten Zylinderwand (4) nach unten, wobei Teilmengen des vorbehandelten Rohgasstroms durch die perforierte Zylinderwand (4) strömen und anschließend zu den Filterschläuchen (20) des Schlauchfilters geleitet werden. Das von Staub und von Schadstoffen befreite Reingas wird am Gasaustritt (5) des Schlauchfilters aus dem Schlauchfilter in eine Reingaskammer (6) geleitet und gelangt über den Reingasstutzen (7) in die Atmosphäre. Während des Betriebs und/oder nach Abreinigung der perforierten Zylinderwand (4) und/oder nach Abreinigung der einzelnen Filterschläuche (20) fällt der Staub in den Zwischenräumen (8, 9) nach unten und gelangt in den unter dem Reaktor (1) kreisförmig angeordneten Sammelbunker (10). Die in den Sammelbunker (10) eingetragene abgeschiedene Menge an Feststoffen wird über eine Förderrinne (11) in einen außerhalb des Reaktors (1) und außerhalb des Schlauchfilters seitlich neben dem Reaktor (1) angeordneten Zwischenbunker (12) geleitet und mindestens teilweise über eine unter dem Zwischenbunker (12) angeordnete Dosiervorrichtung (13) in den Einlaßstutzen (14) des Reaktors (1) für den Rohgasstrom geleitet und mit dem Rohgasstrom erneut in Kontakt gebracht. Die dem Rohgasstrom nicht erneut zugeführte Menge an Staub und/oder trockenen Adsorbentien und/oder trockenem Absorptionsmittel wird über eine Schleuse (15) aus dem Zwischenbunker (12) abgeführt. Die Dosiervorrichtung (13) weist eine Aufgabestelle (19) für trockene Adsorbentien und/oder trockene Absorptionsmittel auf. Über dem Gasaustritt (5) des Schlauchfilters ist ein rotierender Arm (18) angeordnet, der an einer Welle (17) drehbar gelagert ist. Die Welle (17) wird über den Antrieb (16) in eine Drehbewegung versetzt. In der Reingaskammer (6) ist eine Vorrichtung zur Zufuhr von Spülgas angeordnet (nicht dargestellt), mit welcher dem rotierenden Arm (18) Spülgas zur Abreinigung der Filterschläuche (20) zugeführt werden kann. Bei denjenigen Filterschläuchen (20), die sich jeweils unter dem rotierenden Arm (18) befinden, kommt es zu einer kurzzeitigen Unterbrechung der Strömung des vorbehandelten Rohgasstroms und Spülgas gelangt von oben in diese Filterschläuche (20), so daß sich die durch Stützkörper gehaltenen Filterschläuche (20) ruckartig aufblähen. Dies führt zur kurzzeitigen Abreinigung der Filterschläuche (20) von Staub, der in den Sammelbunker (10) fällt.

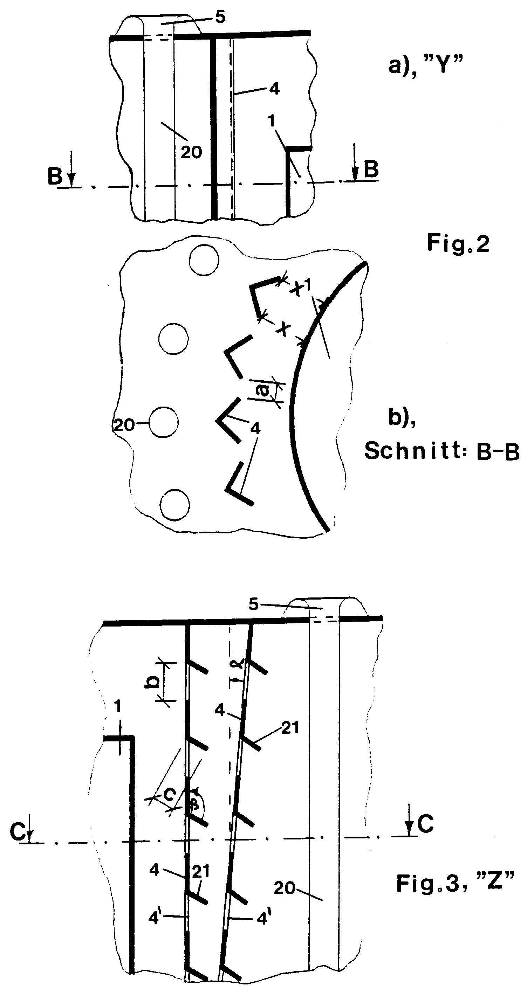

In Fig. 2a, 2b ist das Detail "Y" gemäß Fig. 1 mit der zugehörigen Draufsicht dargestellt. Aus Übersichtsgründen wurde in Fig. 2a auf die Darstellung mehrerer Filterschläuche (20) und mehrerer Winkelprofile, die bei dieser Ausführung die perforierte Zylinderwand (4) bilden, verzichtet. Fig. 2b zeigt die entsprechende Draufsicht gemäß Schnitt B-B in Fig. 2a. Das Detail "Y" zeigt eine perforierte Zylinderwand (4), die aus mehreren, nicht miteinander verbundenen gleichschenkligen Winkelprofilen besteht, die kreisförmig um den Reaktor (1) senkrecht angeordnet und jeweils mit der Decke des Schlauchfilters verbunden sind, wobei die Enden der Schenkel eines jeden Winkelprofils dem Reaktor (1) zugewandt sind und vom Reaktor (1) den gleichen Abstand x aufweisen, wie es in Fig. 2b dargestellt ist. In vorteilhafter Weise wird der freie Abstand a zwischen jeweils zwei unmittelbar benachbarten Winkelprofilen im Bereich 20 bis 200 mm gewählt. Die Anordnung der aus mehreren, nicht miteinander verbundenen gleichschenkligen Winkelprofilen bestehenden perforierten Zylinderwand (4) erfolgt zwischen dem Reaktor (1) und denjenigen Filterschläuchen (20), die dem Reaktor (1) am nächsten angeordnet sind. Bei der Anordnung der aus den gleichschenkligen Winkelprofilen bestehenden perforierten Zylinderwand (4) ist es nicht zwingend erforderlich, daß die Längsachse eines jeden Winkelprofils parallel zur Längsachse des Reaktors (1) verläuft. Je nach Beschaffenheit des abzuscheidenden Staubes kann es vorteilhaft sein, die aus den gleichschenkligen Winkelprofilen bestehende perforierte Zylinderwand von oben ausgehend zu den Filterschläuchen (20) geneigt anzuordnen (nicht dargestellt).

In Fig. 3 ist das Detail "Z" gemäß Fig. 1 dargestellt. Das Detail "Z" zeigt im Gegensatz zum Detail "Y" die Ausgestaltung einer perforierten Zylinderwand (4), die nicht aus mehreren, nicht miteinander verbundenen gleichschenkligen Winkelprofilen besteht. Die gemeinsame Darstellung des Details "Y" mit dem Detail "Z" in Fig. 1 wurde lediglich aus Übersichtsgründen gewählt. In der Praxis weist die perforierte Zylinderwand (4) eine einheitliche konstruktive Ausgestaltung auf. In Fig. 3 wurde ferner aus Übersichtsgründen zum einen eine perforierte Zylinderwand (4) dargestellt, deren Längsachse der Längsachse des Reaktors (1) entspricht. Es ist jedoch auch bei dieser Ausführungsform der perforierten Zylinderwand (4) in einigen Fällen vorteilhafter, die perforierte Zylinderwand (4) von oben ausgehend zu den Filterschläuchen (20) geneigt anzuordnen, wobei der spitze Neigungswinkel α im Bereich von 3 bis 30° liegt. Fig. 3 zeigt beide Varianten, wobei in der Praxis jedoch nur eine realisiert wird. Die in Fig. 3 dargestellte perforierte Zylinderwand (4) besteht aus miteinander an den Längskanten verbundenen plattenförmigen Elementen, die zusammen in Form eines regelmäßigen n-Ecks um den Reaktor (1) angeordnet sind und die Durchtrittsöffnungen (4') aufweisen, deren Höhe oder Durchmesser b 20 bis 220 mm beträgt. Die Durchtrittsöffnungen (4') weisen an ihren unteren Begrenzungen Laschen (21) auf, die zu den Filterschläuchen (20) abgebogen sind, wobei der stumpfe Biegewinkel β im Bereich von 105 bis 165° liegt. Die Breite c einer jeden Lasche beträgt 20 bis 200 mm. Die Länge d (nicht dargestellt) einer jeden Lasche beträgt mindestens 50 mm.

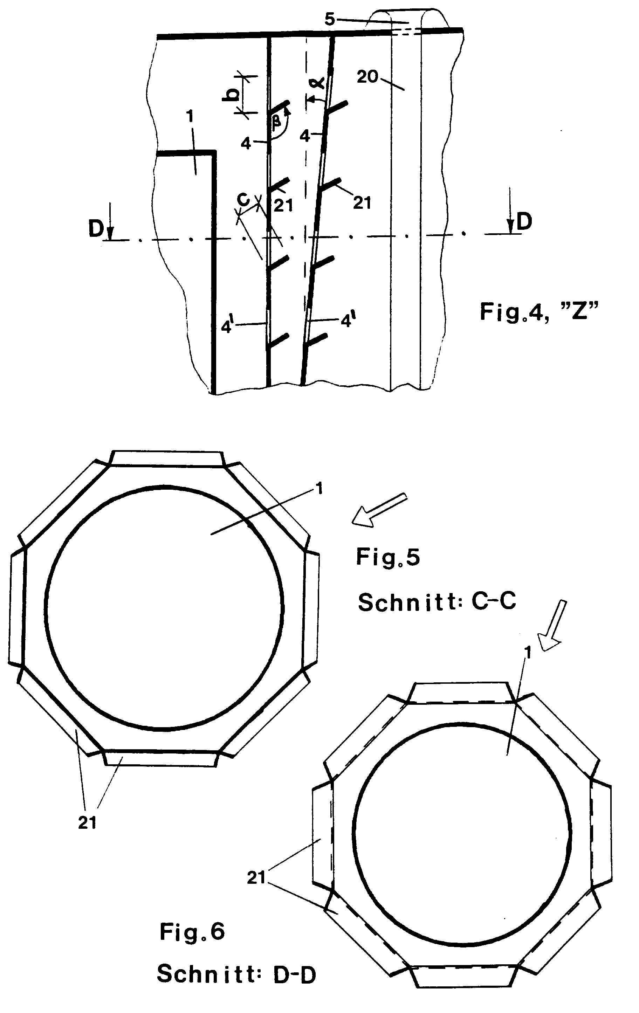

In Fig. 4 ist ein weiteres Detail "Z" gemäß Fig. 1 dargestellt, wobei die Durchtrittsöffnungen (4') im Gegensatz zu der Darstellung in Fig. 3 an ihren oberen Begrenzungen Laschen (21) aufweisen, die zu den Filterschläuchen (20) abgebogen sind. Die konstruktive Ausgestaltung der perforierten Zylinderwand (4), dargestellt in Fig. 4, wird man dann wählen, wenn der abzuscheidende Staub eine relativ große Partikelgröße aufweist und die Gefahr besteht, daß die Filterschläuche durch Abrasion zerstört werden können. Die in Fig. 4 dargestellte perforierte Zylinderwand (4) wirkt im verstärkten Maße als Prallabscheider, da auch diejenigen Staubpartikeln, die auf die Laschen (21) auftreffen, nicht zu den Filterschläuchen (20) gelangen, sondern nach unten in den Sammelbunker (10) fallen. Sind die im vorbehandelten Rohgasstrom vorhandenen Partikeln relativ klein, so ist in vorteilhafter Weise die in Fig. 3 dargestellte Ausführungsform der perforierten Zylinderwand (4) zu wählen, da die gegen die Laschen (21) strömenden Partikeln vom Gasstrom mitgerissen werden und zu den Filterschläuchen (20) gelangen. Gelegentlich kann es vorteilhaft sein, die in Fig. 3 und Fig. 4 dargestellten Ausführungsformen miteinander zu kombinieren.

In Fig. 5 ist die Draufsicht gemäß Schnitt C-C in Fig. 3 dargestellt. Die perforierte Zylinderwand besteht aus plattenförmigen Elementen, die miteinander an den Längskanten verbunden sind und die zusammen in Form eines regelmäßigen 8-Ecks um den Reaktor (1) angeordnet sind. Die Laschen (21) sind an den unteren Begrenzungen der Durchtrittsöffnungen angeordnet und zu den Filterschläuchen (nicht dargestellt) abgebogen.

In Fig. 6 ist die Draufsicht gemäß Schnitt D-D in Fig. 4 dargestellt. Im Gegensatz zu Fig. 5 sind die in Fig. 6 dargestellten Laschen (21) an den oberen Begrenzungen der Durchtrittsöffnungen angeordnet und ebenfalls zu den Filterschläuchen (nicht dargestellt) abgebogen.

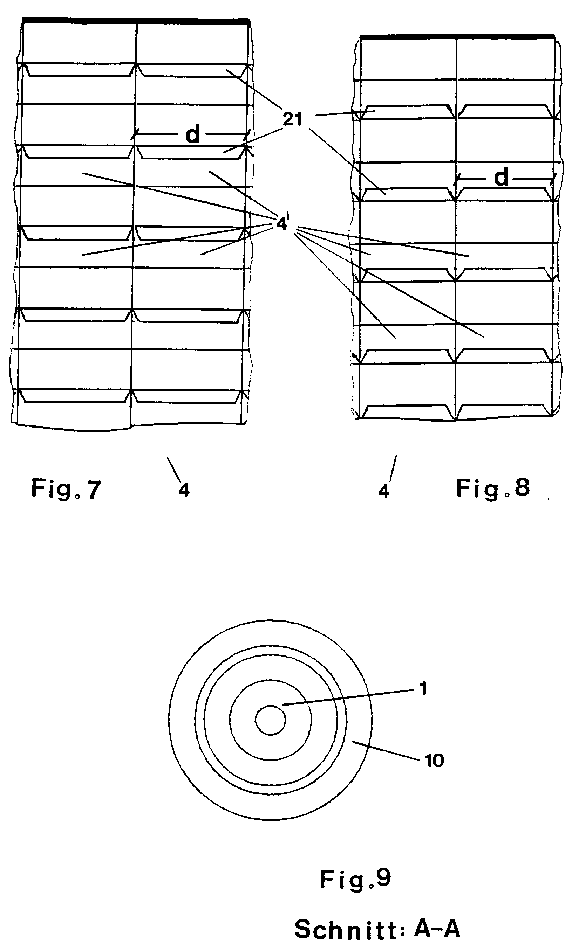

In Fig. 7 ist ein Teil der perforierten Zylinderwand (4) in Blickrichtung des Pfeils in Fig. 5 dargestellt. Zwei plattenförmige Elemente sind dabei miteinander an den Längskanten verbunden.

In Fig. 8 ist ein Teil der perforierten Zylinderwand (4) in Blickrichtung des Pfeils gemäß Fig. 6 dargestellt. Die in Fig. 7 und Fig. 8 dargestellten benachbarten plattenförmigen Elemente sind aus Gründen der Übersichtlichkeit so dargestellt, als wären jeweils zwei plattenförmige Elemente in einer Ebene angeordnet. Die Laschen (21) weisen eine Breite d auf, die in Richtung der Filterschläuche (nicht dargestellt) abnimmt, was jedoch nicht zwingend erforderlich ist.

In Fig. 9 ist die Draufsicht gemäß Schnitt A-A in Fig. 1 verkleinert dargestellt. Um den Reaktor (1) ist kreisförmig ein Sammelbunker (10) angeordnet, der im unteren Teil eine Förderrinne (11) (nicht dargestellt) aufweist.

Die Erfindung wird anhand des nachstehenden Beispiels näher erläutert.

### Beispiel

Die Abgasmenge eines Rohgases beträgt 135000 Nm³/h, wobei das Rohgas eine Temperatur von 100°C, einen Taupunkt von 51°C und einen Staubgehalt von 30 g/Nm³ hat. Ferner sind im Rohgas 5 mg/Nm³ SO₂ enthalten. Der Rohgasstrom wird durch einen mittig senkrecht angeordneten, kreisförmig begrenzten Reaktor geleitet, der einen Durchmesser von 3 m sowie eine Höhe von 10 m hat und der in der Nähe des Eintrittstutzens mit 900 kg/h Ca(OH)₂ beaufschlagt wird, das als Adsorbens wirkt. Im Reaktor wird der Rohgasstrom in innigen Kontakt mit dem Adsorbens gebracht und anschließend am Kopf des Reaktors ausgetragen. Im Abstand von 10 m ist an der Decke des Schlauchfilters um den Reaktor eine perforierte Zylinderwand angeordnet, deren Länge 8 m beträgt und der Länge der einzelnen, um die perforierte Zylinderwand angeordneten Filterschläuche entspricht. Die perforierte Zylinderwand besteht aus miteinander an den Längskanten verbundenen plattenförmigen Elementen, die zusammen in Form eines regelmäßigen 8-Ecks um den Reaktor angeordnet sind und die Durchtrittsöffnungen aufweisen, die kreisförmig gestaltet sind. Die Längsachse der perforierten Zylinderwand entspricht der Längsachse des Reaktors. Nach dem Austreten des vorbehandelten Rohgasstroms am Kopf des Reaktors wird der vorbehandelte Rohgasstrom umgelenkt und strömt an der perforierten Zylinderwand nach unten. Teilmengen des Rohgasstroms strömen dabei gleichzeitig durch die Durchtrittsöffnungen der perforierten Zylinderwand und gelangen anschließend zu den Filterschläuchen des Schlauchfilters, die über ihre Länge gleichmäßig mit den im vorbehandelten Rohgasstrom vorhandenen Partikeln beaufschlagt werden. Das um den Reaktor angeordnete Schlauchfilter besteht aus mehreren Schläuchen, wobei jeder Schlauch einen Durchmesser von 140 mm aufweist. Die Dicke der Schicht aus Partikeln, die sich an den Filterschläuchen abscheiden, ist über die Länge der jeweiligen Filterschläuche nahezu konstant und beträgt in der Regel 2 bis 5 mm. Die abgeschiedenen Partikeln werden in einen unterhalb der perforierten Zylinderwand und unterhalb der Filterschläuche um den Reaktor kreisförmig angeordneten Sammelbunker eingetragen. Das Reingas wird über den Gasaustritt des Schlauchfilters in eine Reingaskammer eingetragen und über einen Reingasaustritt in die Atmosphäre geleitet. Das Reingas ist fast vollständig von Partikeln befreit und ist darüber hinaus frei von sauren Schadstoffen. Die abgeschiedenen Partikeln werden aus dem Sammelbunker über eine Förderrinne zu einem Zwischenbunker geleitet, der über eine Dosiervorrichtung mit dem Einlaßstutzen des Reaktors verbunden ist. Über die Dosiervorrichtung wird ein Teil an bereits abgeschiedenen Partikeln erneut in den Reaktor geleitet und mit dem Rohgasstrom in Kontakt gebracht.

## Patentansprüche

1. Verfahren zur Entstaubung eines Rohgasstromes und/oder Sorption von gasförmigen Stoffen aus dem Rohgasstrom durch Zugabe von trockenen Adsorbentien und/oder durch Zugabe von trockenem Absorptionsmittel in einem senkrecht angeordneten und kreisförmig begrenzten Reaktor (1), bei dem der Rohgasstrom den Reaktor (1) von unten nach oben durchströmt, wobei der Rohgasstrom mit den trockenen Adsorbentien und/oder mit dem trockenen Absorptionsmittel in Kontakt gebracht wird und der Rohgasstrom anschließend durch ein den Reaktor (1) kreisförmig umgebendes Schlauchfilter geleitet wird, dadurch gekennzeichnet, daß der Rohgasstrom nach dem Austritt aus dem Reaktor (1) zuerst durch eine perforierte Zylinderwand (4) und anschließend zu den Filterschläuchen (20) des Schlauchfilters geleitet wird.

2. Verfahren nach Anspruch 1, dadurch gekennzeichnet, daß der Rohgasstrom beim Durchströmen der perforierten Zylinderwand (4) nach oben oder nach unten umgelenkt wird.

3. Verfahren nach Anspruch 1 oder Anspruch 2, dadurch gekennzeichnet, daß die gesamte an der perforierten Zylinderwand (4) und im Schlauchfilter abgeschiedene Menge an Staub und/oder trockenen Adsorbentien und/oder trockenem Absorptionsmittel ggf. nach Abreinigung der perforierten Zylinderwand (4) und/oder nach Abreinigung der einzelnen Filterschläuche (20) in einen unterhalb der perforierten Zylinderwand (4) und unterhalb der Filterschläuche (20) angeordneten Sammelbunker (10) eingetragen wird.

4. Verfahren nach einem der Ansprüche 1 bis 3, dadurch gekennzeichnet, daß die in den Sammelbunker (10) eingetragene abgeschiedene Menge an Staub und/oder trockenen Adsorbentien und/oder trockenem Absorptionsmittel über eine Förderrinne (11) in einen außerhalb des Reaktors (1) und außerhalb des Schlauchfilters seitlich neben dem Reaktor (1) angeordneten Zwischenbunker (12) geleitet wird und mindestens teilweise über eine unter dem Zwischenbunker (12) angeordnete Dosiervorrichtung (13) in den Einlaßstutzen (14) des Reaktors (1) für den Rohgasstrom geleitet und mit dem Rohgasstrom erneut in Kontakt gebracht wird, wobei die dem Rohgasstrom nicht erneut zugeführte Menge an Staub und/oder trockenen Adsorbentien und/oder trockenem Absorptionsmittel aus dem Zwischenbunker (12) über eine Schleuse (15) abgeführt wird.

5. Vorrichtung zur Durchführung des Verfahrens nach einem der Ansprüche 1 bis 4, bestehend aus einem mittig senkrecht angeordneten, kreisförmig begrenzten Reaktor (1), einem um den Reaktor (1) kreisförmig angeordneten Schlauchfilter mit achsparallel zum Reaktor (1) senkrecht angeordneten Filterschläuchen (20), wobei das obere Ende (3) des Reaktors (1) tiefer angeordnet ist als der Gasaustritt (5) des Schlauchfilters, dadurch gekennzeichnet, daß senkrecht um den Reaktor (1) zwischen Reaktor (1) und denjenigen Filterschläuchen (20), die dem Reaktor (1) am nächsten angeordnet sind, eine perforierte Zylinderwand (4) angeordnet ist.

6. Vorrichtung nach Anspruch 5, dadurch gekennzeichnet, daß die Länge der perforierten Zylinderwand (4) der Länge der Filterschläuche (20) entspricht.

7. Vorrichtung nach Anspruch 5 oder Anspruch 6, dadurch gekennzeichnet, daß die perforierte Zylinderwand (4) aus mehreren, nicht miteinander verbundenen gleichschenkligen Winkelprofilen besteht, die kreisförmig um den Reaktor (1) senkrecht angeordnet und jeweils mit der Decke des Schlauchfilters verbunden sind, wobei die Enden der Schenkel eines jeden Winkelprofils dem Reaktor (1) zugewandt sind und zum Reaktor (1) den gleichen Abstand x aufweisen und der freie Abstand a zwischen jeweils zwei unmittelbar benachbarten Winkelprofilen 20 bis 200 mm beträgt.

8. Vorrichtung nach Anspruch 5 oder Anspruch 6, dadurch gekennzeichnet, daß die perforierte Zylinderwand (4) aus miteinander an den Längskanten verbundenen plattenförmigen Elementen besteht, die zusammen in Form eines regelmäßigen n-Ecks um den Reaktor (1) angeordnet sind und die Durchtrittsöffnungen (4') aufweisen, deren Höhe oder Durchmesser b 20 bis 220 mm beträgt.

9. Vorrichtung nach Anspruch 8, dadurch gekennzeichnet, daß die Durchtrittsöffnungen (4') an ihren oberen und/oder unteren Begrenzungen Laschen (21) aufweisen, die zu den Filterschläuchen (20) abgebogen sind, wobei der stumpfe Biegewinkel β im Bereich von 105 bis 165° liegt und die Breite c einer jeden Lasche 20 bis 200 mm und die Länge d einer jeden Lasche mindestens 50 mm betragen.

10. Vorrichtung nach einem der Ansprüche 5 bis 9, dadurch gekennzeichnet, daß die perforierte Zylinderwand (4) von oben ausgehend zu den Filterschläuchen (20) geneigt angeordnet ist, wobei der spitze Neigungswinkel α im Bereich von 3 bis 30° liegt.

11. Vorrichtung nach einem der Ansprüche 5 bis 10, dadurch gekennzeichnet, daß unterhalb der perforierten Zylinderwand (4) und unterhalb der Filterschläuche (20) um den Reaktor (1) kreisförmig ein Sammelbunker (10) mit Staubaustrag angeordnet ist.

12. Vorrichtung nach Anspruch 11, dadurch gekennzeichnet, daß der Sammelbunker (10) als Staubaustrag im unteren Teil eine Förderrinne (11) aufweist, die mit einem seitlich neben dem Reaktor (1) angeordneten Zwischenbunker (12) verbunden ist, der eine Schleuse (15) aufweist.

13. Vorrichtung nach Anspruch 12, dadurch gekennzeichnet, daß zwischen dem Zwischenbunker (12) und dem Einlaßstutzen (14) des Reaktors (1) eine Dosiervorrichtung (13) angeordnet ist.

14. Vorrichtung nach Anspruch 13, dadurch gekennzeichnet, daß die Dosiervorrichtung (13) eine Aufgabestelle (19) für trockene Adsorbentien und/oder trockene Absorptionsmittel aufweist.
